# EUROPEAN PATENT APPLICATION

(11) **EP 3 318 989 A1**
(43) Date of publication of application: **09.05.2018**
(21) Application number: 16306460.3
(22) Date of filing: 08.11.2016
(51) Int. Cl.: G06F 17/30

(54) **METHOD FOR MANIPULATING A COLLECTION OF AUDIOVISUAL FILES**

(71) Applicant: Thomson Licensing, 92130 Issy-les-Moulineaux (FR)
(72) Inventor: PEREZ, Patrick, 35576 CESSON-SEVIGNE (FR); LEFEBVRE, Frédéric, 35576 CESSON-SEVIGNE (FR); JAIN, Himalaya, 35576 CESSON-SEVIGNE (FR); DEMARTY, Claire-Hélène, 35576 CESSON-SEVIGNE (FR)
(74) Representative: Huchet, Anne

(57) **Abstract**

The present invention relates to a method for manipulating a collection (C) of audio-visual files stored in a source location (1), comprising the step of moving said collection of audio-visual files from the source location (1) to a target location (2). According to the invention, a copy of a subset (P) of selected audiovisual files of said collection is automatically kept in said source location (1) after the move for at least one time period.

## Description

### 1. Technical Field

The present invention relates generally to the field of the transfer of collection of audiovisual files.

### 2. Background Art

Managing and sharing audiovisual content (or AV content) such as audio files, videos and photos has become ubiquitous and it routinely involves bulk move of audiovisual files (or AV files) from one location, called source location, to another location, called target location. The collection of AV files may be moved from a source folder to a target folder in a same device or from a source device to a target device, said source device or target device being possibly the cloud.

Unless additional manual operations are performed, the whole collection is either moved or copied to target location. In the first case, all the AV files are removed from the source location and in the second case the AV files stay all in the source location. There are frequent cases, however, where none of these two possibilities is satisfactory.

### 3. Summary of Invention

A purpose of the present invention is to propose another possibility. More specifically, it is proposed to keep automatically a copy of a subset of the collection that is moved in the source location for at least one time period after the move. The audiovisual files a copy of which is kept in the source location are selected according to different criteria, for example related to their content, their usage, a user profile or a source location profile.

So the invention relates to a method for manipulating a collection of audio-visual files stored in a source location, comprising the step of moving said collection of audio-visual files from the source location to a target location, wherein a copy of a subset of selected audiovisual files of said collection is automatically kept in said source location after the move for at least one time period.

In a particular embodiment, the audiovisual files of the subset are selected according to at least one of the following data:
- the content of the audiovisual files;
- metadata of the audiovisual files;
- a source location profile;
- a user profile.

In a particular embodiment, the number of audiovisual files of the subset is a ratio of the audiovisual files of the collection, said ratio being defined in the source location profile or the user profile.

In a particular embodiment, copies of the most representative audiovisual files according to a criteria based on visual content are kept in the source location.

In a particular embodiment, the metadata of the audiovisual files comprises a creation date. The audiovisual files of the subset are selected based on said creation date. For example, copies of the most recent audiovisual files are kept in the source location.

In a particular embodiment, the metadata of the audiovisual files comprises a last opening date and a number of times the audiovisual file has been opened and wherein the audiovisual files of the subset are selected based on said metadata.

For example, the audiovisual files having the most recent last opening date or the most often opened audiovisual files are selected.

In a particular embodiment wherein the audiovisual files are images or videos, the audiovisual files of the subset to be kept are selected based on saliency or visual quality criteria.

In a particular embodiment, at least one of the copies to be kept are advantageously processed in order to reduce its memory size. For example, in the case of images, the image is resized and, in case of videos, the video is subsampled.

In a particular embodiment, the source location and the target location are present in two separate devices. The source location is for example a mobile phone and the target local is a computer having an extended capacity storage.

### 4. Brief description of the drawings

The invention can be better understood with reference to the following description and to the drawings, given by way of example and not limiting the scope of protection, and in which
- Figure 1 is a schematic view of a move of audiovisual files according to the invention; and
- Figure 2 is a flow chart illustrating the method according to the invention.

### 5. Description of embodiments

While example embodiments are capable of various modifications and alternative forms, embodiments thereof are shown by way of example in the drawings and will herein be described in details. It should be understood, however, that there is no intent to limit example embodiments to the particular forms disclosed, but on the contrary, example embodiments are to cover all modifications, equivalents, and alternatives falling within the scope of the claims.

The invention proposes a new possibility of manipulating a collection of audiovisual files when this collection is moved from one source location to a target location. A collection of audiovisual files designates a set of audiovisual files, these audiovisual files being indifferently video files, audio files, images or photos. A subset of the collection designates a portion of the collection, the number of audiovisual files of the subset being lower to the number of audiovisual files of the collection.

According to the invention, it is proposed to keep automatically a copy of a subset of the moved collection in the source location for at least one time period after the move. The copies are kept for a limited definite time period after the move, for example during a week or a month, or for an indefinite time period.

A typical usage of the invention is the transfer of photos or images from a mobile device with limited storage capacities to another device or location with large storage capacities, like for example a personal computer or the cloud. Currently, when the user wants to save on its mobile device, the easiest and fastest way to do it with current systems is to do bulk move, which erases all content from source location. The invention proposes to keep automatically copies of a subset of the moved files in the source location.

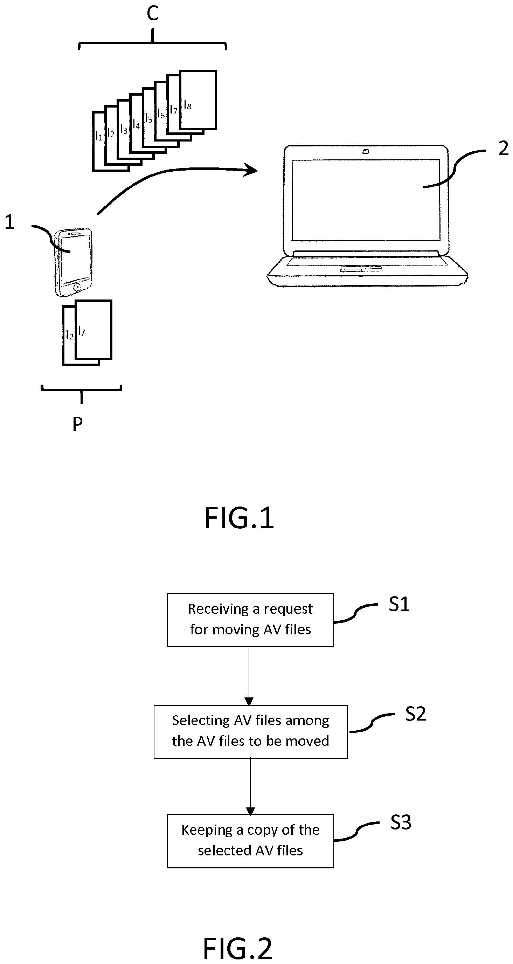

Fig.1 illustrates this case where a collection C of AV files is moved from a mobile phone 1 to a personal computer 2. Copies of a portion P of the collection C are kept on the mobile phone 1 after the move. The collection comprises eight photos I₁ to I₈. A copy of the photos I₂ and I₇ is kept on the mobile phone after the move.

Fig.2 is a flow chart of the steps implemented by the mobile phone. In a first step S1, the mobile phone 1 receives a request or an instruction for moving a collection of AV files stored in its memory. In a second step S2, the mobile phone selects AV files to be kept according to a selection criterion or a combination of selection criteria. In a third step S3, the mobile phone keeps a copy selected AV files in its memory and transfers the AV files to be moved to the personal computer. Moved AV files are erased from the memory of the mobile phone.

The audiovisual files to be kept are selected automatically according to one or a plurality of selection criteria.

In a first embodiment, the audiovisual files a copy of which is kept on the source location are selected according to metadata associated with the audiovisual files. These metadata comprises for example the creation date of the audiovisual files and/or a last opening date and/or a number of times the audiovisual file has been opened

The audiovisual files to be kept in the source location are for example:
- the most recent AV file or the n most recent AV files, with n being a small integer, or
- the last opened AV file or the n last opened AV files, or
- the most often opened AV file or the n most often opened AV file.

The integer n is predetermined or is defined in a user profile or a source location profile.

In another embodiment, a predefined number m of AV files of the collection is kept in the source location. These m AV files are for example the m first AV files of the collection or the m last AV files of the collection.

In another embodiment, in case of videos or images, the most representative or interesting files in terms of visual content are kept in the source location. Several methods exist in the literature to determine the interest of an image in terms of saliency visual quality, aesthetics, emotion or memorability. Each one of these criteria or a combination of them can be used for selecting the AV files to be kept. The files that are above a certain level of interest are kept. As mentioned above, m may be fixed or dependent of the source location (m may be defined in the source location profile) or of the user (m may be defined in the user profile).

The process for determining the interest of the files is advantageously performed off-line and the result can be introduced into the metadata of the AV files.

In another embodiment, the number m of AV files to be kept is a ratio of the total number of AV files of the collection. This ratio is for example equal to 1/10. Of course, if the resulting number of AV files to be kept is not an integer, the number is rounded up or down. This ratio may be defined in the source location profile or the user profile.

In another embodiment, the selected audiovisual files to be kept in the source location are processed in order to reduce their memory size. It allows to further save space in the source location. For example, in the case of images, they may be resized. Advantageously, the image is resized such that visualization on the source device remains comfortable. In case of videos, the AV files may be subsampled.

Thus according to the invention, if bulk move of a collection of AV files to another location is required, either by a user or by a synchronization client, a copy of selected files is retained, possibly upon explicit user's request or acceptance in former case, at source location. This way, the user will still be able to enjoy a meaningful part of the collection without extra work.

Although some embodiments of the present invention have been illustrated in the accompanying drawings and described in the foregoing detailed description. It should be understood that the present invention is not limited to the disclosed embodiments, but is capable of numerous rearrangements, modifications and substitutions without departing from the invention as set forth and defined by the following claims.

## Claims

1. Method for manipulating a collection (C) of audio-visual files stored in a source location (1), comprising moving said collection of audio-visual files from the source location (1) to a target location (2), and
wherein a copy of a subset (P) of selected audiovisual files of said collection is automatically kept in said source location (1) after the move for at least one time period.

2. Method according to claim 1, wherein the audiovisual files of said subset are selected according to at least one of the following criteria:
- the content of the audiovisual files;
- metadata of the audiovisual files;
- a source location profile;
- a user profile.

3. Method according to claim 2, wherein the number of audiovisual files of the subset is a ratio of the number of the audiovisual files of said collection, said ratio being defined in the source location profile or the user profile.

4. Method according to claim 2 or 3, wherein copies of the most representative audiovisual files according to a criteria based on visual content are kept in the source location.

5. Method according to claim 2 or 3, wherein the metadata of the audiovisual files comprises a creation date and wherein the audiovisual files of the subset are selected based on said creation date.

6. Method according to claim 2 or 3, wherein the metadata of the audiovisual files comprises a last opening date and a number of times the audiovisual file has been opened and wherein the copies to be kept are selected based on said metadata.

7. Method according to claim 2 or 3, wherein the audiovisual files are images or videos and wherein the audiovisual files of the subset are selected based on saliency or visual quality criteria.

8. Method according to any one of claims 1 to 7, wherein at least one of the copies to be kept is processed after the move in order to reduce its memory size.

9. Method according to claim 8, wherein said at least one of the copies is subsampled or resized.

10. Method according to any one of claims 1 to 9, wherein the source location and the target location are
present in two separate devices respectively.
